# EUROPÄISCHE PATENTSCHRIFT

(11) **EP 3 194 887 B1**
(45) Veröffentlichungstag und Bekanntmachung des Hinweises auf die Patenterteilung: **06.11.2019**
(21) Anmeldenummer: 15774866.6
(22) Anmeldetag: 07.09.2015
(51) Int. Cl.: G01C 15/00

(54) **VORRICHTUNG UND VERFAHREN ZUR ABSORPTION VON STRAHLUNG**
DEVICE AND METHOD FOR ABSORBING RADIATION
DISPOSITIF ET PROCÉDÉ D'ABSORPTION DE RAYONNEMENT

(30) Priorität: 15.09.2014 DE 102014218461
(43) Veröffentlichungstag der Anmeldung: 26.07.2017
(73) Patentinhaber: Robert Bosch GmbH, 70442 Stuttgart (DE)
(72) Erfinder: LEOPOLD, Gregor, 85051 Ingolstadt (DE)
(86) Internationale Anmeldenummer: PCT/EP2015/070407
(87) Internationale Veröffentlichungsnummer: WO 2016/041806

(56) Entgegenhaltungen:
- EP-A1- 2 639 548
- WO-A1-2012/070436
- US-A- 5 745 293
- Paul Kassebaum: "Reflect Through a Cylindrical Mirror", , 26 July 2013 (2013-07-26), XP055542848, Retrieved from the Internet: URL:https://www.mathworks.com/matlabcentra l/mlc-downloads/downloads/submissions/4246 7/versions/4/screenshot.jpg [retrieved on 2019-01-16]
- Anonymous: "Image | Assembly of First Optics Module | NuSTAR", , 16 May 2010 (2010-05-16), XP055542842, Retrieved from the Internet: URL:https://www.nustar.caltech.edu/image/n ustar_instruments02 [retrieved on 2019-01-16]

## Beschreibung

### Stand der Technik

Die Erfindung betrifft Verfahren zur Ausrichtung eines Lasers.

Vorrichtungen zur Ausrichtung eines Lasers sind im Stand der Technik bekannt.

Diese Art von Vorrichtungen werden üblicherweise dazu genutzt Höhenmessungen mit einem Laser durchzuführen. Hierbei wird der Laserstrahl auf eine Skala oder ein Linear projiziert und der entsprechende Punkt an der Skala oder dem Linear zur Höhenmessung abgelesen.

In dem Dokument US 5 745 293 A ist eine Vorrichtung zur Absorption von parallelem Laserlicht gezeigt.

In dem Dokument EP2639548 A1 ist ein Verfahren zur Ausrichtung eines Linienlasers wobei mindestens ein Körper und ein Linienlaser zueinander positioniert werden gezeigt.

### Offenbarung der Erfindung

Es ist eine Aufgabe der Erfindung, ein Verfahren bereitzustellen, welches ein einfaches, zuverlässiges und genaues Ausrichten eines Lasers oder eines Körpers zu einem Laser ermöglicht.

Diese Aufgabe wird durch ein erfindungsgemäßes Verfahren nach dem unabhängigen Patentanspruch 1 gelöst.

Im Gegensatz zu den bekannten Verfahren zur Ausrichtung eines Lasers bei denen Lineale oder Skalen zum Einsatz kommen ist eine Messung mit höherer Genauigkeit möglich. Eine Messung im Bereich von 1/10mm war bisher bei Laserstrahlen mit einer Breite von 1,5 bis 2 mm nicht möglich. Durch den Einsatz einer Laserfalle, in der der Laserstrahl absorbiert wird, ist es möglich Messungen durchzuführen, die eine Wiederholgenauigkeit von 0,1 bis 0,2 mm aufweisen.

Es ist von Vorteil, wenn die Strahlfalle als schlitzförmige Vertiefung ausgebildet ist, da diese besonders die Strahlung eines Linienlasers, welche in Form einer Ebene emittiert wird, gut absorbiert.

Vorteilhaft ist eine schlitzförmige Vertiefung, die den Körper umläuft, da in diesem Fall der Körper beliebig im Bezug auf den Laser ausgerichtet werden kann. Es ist kein besonderer Justierungsaufwand nötig, bevor die Vorrichtung in Benutzung genommen werden kann.

Wenn die schlitzförmige Vertiefung der Strahlfalle die Breite der Strahlung des Lasers, insbesondere des Linienlasers hat, ist eine Messung mit hoher Präzision und Genauigkeit möglich.

Es ist von Vorteil, wenn die Oberfläche mindestens eine Facette aufweist, da durch die glatte Oberfläche der Facette die Strahlung gut sichtbar reflektiert wird. Dies ist besonders bei einem Linienlaser von Vorteil, da in diesem Fall die Strahlung in Form einer geraden Linie auf der Facette sichtbar ist.

Vorteilhaft aufgrund der hohen Messgenauigkeit ist ein Verfahren zur Ausrichtung eines Lasers, insbesondere eines Linienlasers, bei dem mindestens einem Körper einer vorhergenannten Vorrichtung und ein Linienlaser zueinander positioniert werden, wobei der Linienlaser und/oder der Körper so ausgerichtet wird, dass die Strahlung des Linienlasers in der Strahlfalle des Körpers absorbiert wird.

Um eine Ausrichtung eines Linienlasers parallel zu einer Bodenfläche zu erzielen ist ein Verfahren von Vorteil, bei dem mindestens drei Körper und ein Linienlaser auf einer Oberfläche zueinander positioniert werden, und wobei der Linienlaser so ausgerichtet wird, dass die Strahlung des Linienlasers in der jeweiligen Strahlfalle der mindestens drei Körper absorbiert wird, wobei die Höhe der Strahlfalle im Bezug auf den gleichen Referenzpunkt für die mindestens drei Körper gleich ist. Dieses Verfahren ermöglicht eine Ausrichtung eines Linienlasers zu einer Bodenfläche mit besonders hoher Genauigkeit und ist einfach zu realisieren.

Vorteilhafterweise kann das vorhergenannte Verfahren für einen Linienlaser eines Scheinwerfereinstellgerätes genutzt werden, da das Scheinwerfereinstellgerät parallel zur Aufstandsfläche des Fahrzeuges ausgerichtete sein muss, wobei die mindestens drei Körper an drei unterschiedlichen Punkten der Aufstandsfläche eines Fahrzeuges positioniert werden, um das Scheinwerfereinstellgerät parallel zur Aufstandsfläche des Fahrzeuges auszurichten.

### Ausführungsbeispiele

Ausführungsbeispiele der Erfindung sind in der Zeichnung dargestellt und in der nachfolgenden Beschreibung näher erläutert.

Es zeigen:
- Figur 1: eine perspektivische Darstellung einer Vorrichtung zur Absorption von Strahlung,

- Figur 2: eine perspektivische Darstellung einer Vorrichtung zur Absorption von Strahlung,

- Figur 3: eine perspektivische Darstellung einer Vorrichtung zur Absorption von Strahlung,

- Figur 4: eine weitere Darstellung einer Vorrichtung zur Absorption von Strahlung nach dem dritten Ausführungsbeispiel und
- Figur 5: eine schematische Darstellung eines Messsystems mit einer Vorrichtung zur Absorption von Strahlung und mit einem Laser.

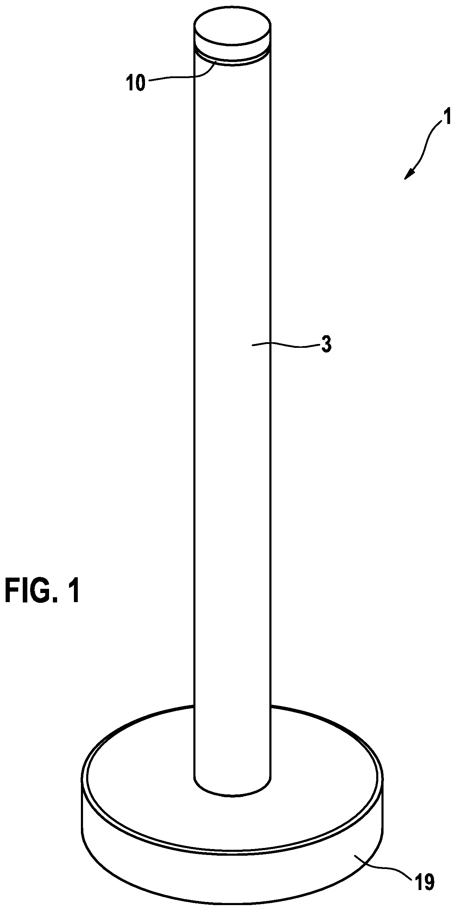

In Figur 1 ist eine perspektivische Darstellung einer Vorrichtung zur Absorption von Strahlung 14 gezeigt. Die Vorrichtung weist einen Körper 1 auf. Der Körper 1 wird durch einen Stab und eine Bodenplatte 19 gebildet. Der Körper 1 weist eine Oberfläche 3 auf, welche Strahlung 14, insbesondere Laserstrahlung 14, reflektiert.

Die Oberfläche 3 wird durch eine Geometrie gebildet, die einen kreisförmigen Querschnitt hat. Der Querschnitt der Oberfläche 3 kann auch eine andere Querschnittsform aufweisen.

Der Körper 1 weist eine Strahlfalle 10 auf, welche Strahlung, insbesondere Laserstrahlung, absorbiert. Die Strahlfalle 10 ist als schlitzförmige Vertiefung ausgebildet. Die schlitzförmige Vertiefung kann als Nut in die Oberfläche des Körpers gefräst werden. Die in Figur 1 dargestellte Strahlfalle 10 ist eine schlitzförmige Vertiefung, die den Körper 1 umläuft. Gemäß einer weiteren Ausführungsform kann die schlitzförmige Vertiefung nur auf einem Teilbereich der Oberfläche 3 des Körpers 1 vorhanden sein. In diesem Fall ist die schlitzförmige Vertiefung so positioniert, dass sie dem Laserstrahl 14 zugewandt ist.

Die schlitzförmige Vertiefung der Laserfalle 10 hat eine Breite, die der Breite der Strahlung 14 entspricht. Die Breite kann auch bis zu 0,5 mm größer als die Breite der Strahlung 14 gewählt werden. Bei der Strahlung 14 handelt es sich vorzugsweise um die Strahlung 14 eines Lasers 12, z.B. eines Linienlasers 12, da dieser je nach Bauart eine definierte Breite der Strahlung 14 aufweist. Die Strahlung 14 wird in der Laserfalle 10 vollständig absorbiert, wenn die Breite der schlitzförmigen Vertiefung der Breite der Strahlung 14 entspricht.

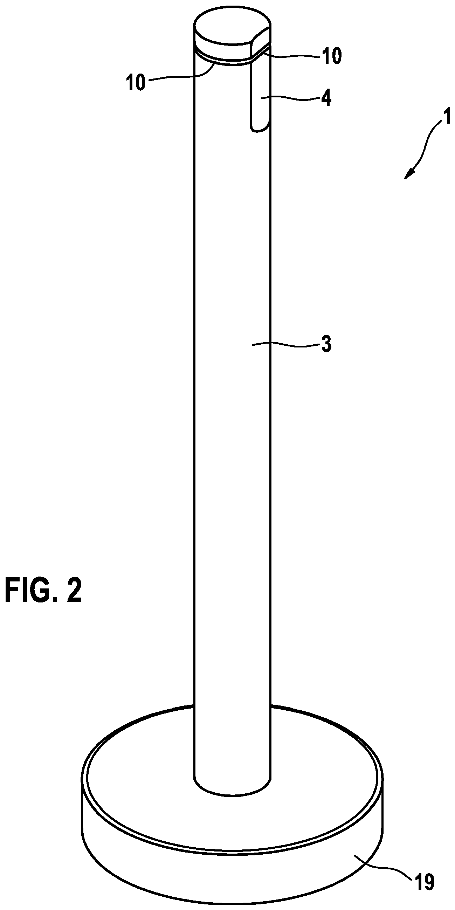

In Figur 2 ist ein zweites Ausführungsbeispiel des Körpers 1 gezeigt. Dieses Ausführungsbeispiel entspricht dem Ausführungsbeispiel nach Figur 1. Es weist jedoch eine Facette 4 auf der Oberfläche 3 des Körpers 1 auf, welche die Strahlung gut sichtbar reflektiert. Die Facette 4 kann auf der Oberfläche 3 des Körpers durch Fräsen hergestellt werden. Durch die ebene Fläche der Facette 4 wird die Strahlung 14 eines Linienlasers 12 in Form einer Linie auf der Facette 4 reflektiert und ist damit für einen Benutzer gut sichtbar. In einer weiteren Ausführungsform weist die Oberfläche 3 mehrere Facetten 4 auf.

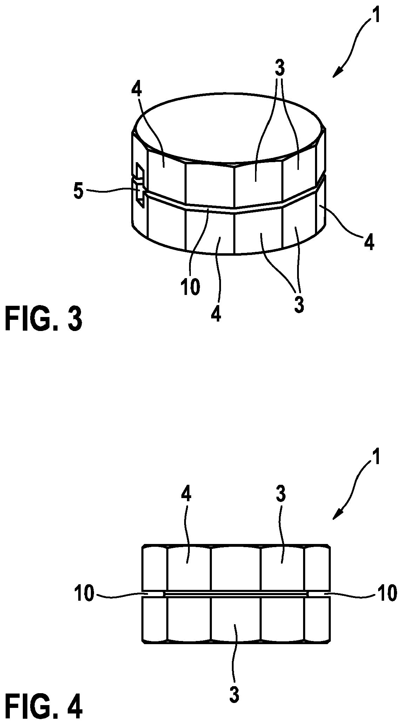

In Figur 3 und 4 ist ein drittes Ausführungsbeispiel eines Körpers 1 gezeigt. Der Körper 1 wird durch einen Zylinder gebildet und weist auf seiner gesamten Oberfläche 3 eine Vielzahl von Facetten 4 auf. Des Weiteren weist der Körper 1 eine Strahlfalle 10 auf, welche in Form einer schlitzförmigen Vertiefung oder Nut gebildet ist. Die Strahlfalle 10 umläuft den gesamten Körper 1 kann jedoch in einer anderen Ausführungsform auch nur einen Teilbereich des Körpers 1 betreffen. Der Körper 1 gemäß dem dritten Ausführungsbeispiel weist eine Vertiefung 5 auf, um den Körper 1 an einer Haltevorrichtung 17 zu befestigen.

Der Körper 1 kann aus Aluminium bestehen, welches in der Strahlfalle 10 schwarz eloxiert ist und auf der Oberfläche 3 und der mindestens einen Facetten 4 durch das Fräsen eine Glatte und gut reflektierende Oberfläche aufweist.

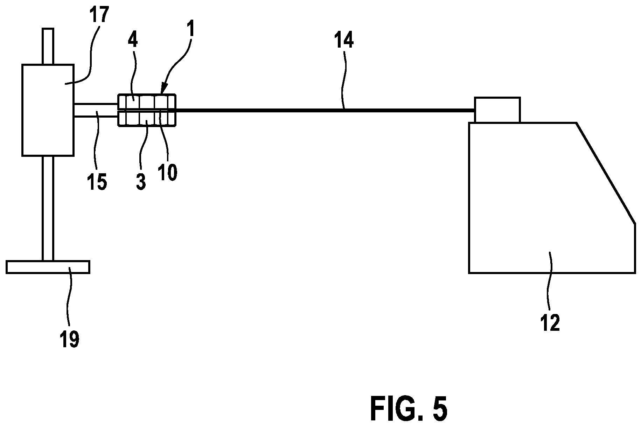

Ein Beispiel einer Haltevorrichtung ist in Figur 5 gezeigt. Hier wurde der Körper 1 gemäß dem dritten Ausführungsbeispiel auf einen Stab 15 der Haltevorrichtung 17 befestigt.

Ein Messsystem gemäß der vorgeschlagenen Erfindung besteht aus mindestens einem Körper 1 gemäß dem ersten, zweiten oder dritten Ausführungsbeispiel und einem Laser 12, insbesondere einem Linienlaser 12.

In Figur 5 ist ein Messsystem mit einem Körper 1 gemäß dem dritten Ausführungsbeispiel und ein Linienlaser 12 gezeigt. Der Körper 1 ist auf einen Stab 15 der Haltevorrichtung 17 befestigt. Der Linienlaser 12 emittiert Strahlung 14, welche auf den Körper 1 gerichtet ist. Entspricht die Höhe der Strahlung 14 bezogen auf denselben Referenzpunkt der Höhe der Strahlfalle 10, so wird die Strahlung 14 des Lasers 12 durch die Strahlfalle 10 absorbiert. Besteht ein Unterschied in der Höhe der Strahlung 14 und der Höhe der Strahlfalle 10 bezogen auf denselben Referenzpunkt, so wird die Strahlung 14 auf der Oberfläche 3 des Körpers reflektiert. Da die Oberfläche 3 des Körpers 1 eine Vielzahl von Facetten 4 aufweist, wird die Strahlung 14 des Linienlasers 12 in Form einer geraden Linie auf mindestens einer der Facetten 4 reflektiert.

Soll der Linienlasers 12 im Bezug auf eine bestimmte Höhe über einen Referenzpunkt ausgerichtet werden, so kann der Stab 15 der Haltevorrichtung 17 mit Hilfe einer externen Messvorrichtung oder einer integrierten Skala auf eine bestimmte Höhe justiert werden. Im Folgenden wird der Linienlaser 12 so zur Haltevorrichtung 17 positioniert, dass die Strahlung 14 des Linienlasers 12 in der Strahlfalle 10 des Körpers 1 absorbiert wird.

Alternativ besteht die Möglichkeit, dass der Laser 12 fest justiert ist und der Körper 1 auf dem Stab 15 der Haltevorrichtung 17 so lange nach oben oder unten bewegt wird bis die Strahlung 14 des Linienlasers 12 in der Strahlfalle 10 absorbiert wird. Nachfolgend kann mit Hilfe der externen Messvorrichtung oder einer integrierten Skala in der Haltevorrichtung 17 die Höhe der Strahlung 14 des Linienlasers 12 abgelesen werden.

Um den Linienlaser 12 eines Scheinwerfereinstellgerätes im Bezug zur Boden der Werkstatt oder der Aufstandsfläche des zu vermessenden Fahrzeuges auszurichten werden mindestens drei Körper 1 an drei unterschiedlichen Punkten zur Bodens der Werkstatt oder der Aufstandsfläche des zu vermessenden Fahrzeuges positioniert. Nachfolgend wird das Scheinwerfereinstellgerät so lange ausgerichtet bis der Linienlaser 12 des Scheinwerfereinstellgerätes gleichzeitig in der jeweiligen Strahlfalle 10 der mindestens drei Körper 1 absorbiert wird.

Für dieses Messverfahren können drei identische Körper 1 gemäß dem ersten oder zweiten Ausführungsbeispiel benutzt werden oder drei Körper 1 gemäß dem dritten Ausführungsbeispiel, welche auf einer Haltervorrichtung 17 befestigt sind. Hierbei muss berücksichtigt werden, dass die Höhe der Strahlfalle 10 im Bezug auf den gleichen Referenzpunkt für die mindestens drei Körper 1 gleich ist.

Falls das Scheinwerfereinstellgerät eine Libelle aufweist, kann diese auf die neue Position des Linienlasers 12 geeicht werden, so dass diese Eichung als Referenzwert für spätere Messungen genutzt werden kann.

## Patentansprüche

1. Verfahren zur Ausrichtung eines Linienlasers (12), wobei mindestens ein Körper (1), welcher an seiner Oberfläche (3,4) Strahlung (14) reflektiert und eine Strahlfalle (10) aufweist, welche Strahlung (14) absorbiert, wobei die Strahlfalle (10) als schlitzförmige Vertiefung ausgebildet ist, und ein Linienlaser (12) zueinander positioniert werden, wobei der Linienlaser (12) und/oder der Körper (1) so ausgerichtet wird, dass die Strahlung (14) des Linienlasers (12) in der Strahlfalle (10) des Körpers (1) absorbiert wird.

2. Verfahren nach Anspruch 1, wobei mindestens drei Körper (1), welche an ihrer Oberfläche (3,4) Strahlung (14) reflektieren und eine Strahlfalle (10) aufweisen, welche Strahlung (14) absorbiert, wobei die Strahlfalle (10) als schlitzförmige Vertiefung ausgebildet ist, und ein Linienlaser (12) auf einer Oberfläche zueinander positioniert werden, und wobei der Linienlaser (12) so ausgerichtet wird, dass die Strahlung (14) des Linienlasers (12) in der jeweiligen Strahlfalle (10) der mindestens drei Körper (1) absorbiert wird, wobei die Höhe der Strahlfalle (10) im Bezug auf den gleichen Referenzpunkt für die mindestens drei Körper (1) gleich ist.

3. Verfahren nach Anspruch 2, wobei der Linienlaser (12) der Linienlaser (12) eines Scheinwerfereinstellgerätes ist und die mindestens drei Körper (1) an drei unterschiedlichen Punkten der Aufstandsfläche eines Fahrzeuges positioniert werden, um das Scheinwerfereinstellgerät parallel zur Aufstandsfläche des Fahrzeuges auszurichten.

## Claims

1. Method for aligning a line laser (12), wherein at least one body (1), which reflects radiation (14) at its surface (3, 4) and has a beam trap (10) which absorbs radiation (14), the beam trap (10) being formed as a slit-shaped depression, and a line laser (12) are positioned in relation to one another, wherein the line laser (12) and/or the body (1) are aligned such that the radiation (14) of the line laser (12) is absorbed in the beam trap (10) of the body (1).

2. Method according to Claim 1, wherein at least three bodies (1), which reflect radiation (14) at their surface (3, 4) and have a beam trap (10) which absorbs radiation (14), the beam trap (10) being formed as a slit-shaped depression, and a line laser (12) are positioned in relation to one another on a surface, and wherein the line laser (12) is aligned such that the radiation (14) of the line laser (12) is absorbed in the respective beam trap (10) of the at least three bodies (1), wherein the height of the beam trap (10) with respect to the same reference point is the same for the at least three bodies (1) .

3. Method according to Claim 2, wherein the line laser (12) is the line laser (12) of a headlamp aiming device and the at least three bodies (1) are positioned at three different points of the contact area of a vehicle, in order to align the headlamp aiming device parallel to the contact area of the vehicle.

## Revendications

1. Procédé pour aligner un laser linéaire (12), au moins un corps (1), qui réfléchit un rayonnement (14) au niveau de sa surface (3, 4) et possède un piège à rayons (10) qui absorbe le rayonnement (14), le piège à rayons (10) étant réalisé sous la forme d'une cavité en forme de fente, et un laser linéaire (12) étant positionnés l'un par rapport à l'autre, le laser linéaire (12) et/ou le corps (1) étant orientés de telle sorte que le rayonnement (14) du laser linéaire (12) est absorbé dans le piège à rayons (10) du corps (1).

2. Procédé selon la revendication 1, au moins trois corps (1), qui réfléchissent un rayonnement (14) au niveau de leur surface (3, 4) et possèdent un piège à rayons (10) qui absorbe le rayonnement (14), le piège à rayons (10) étant réalisé sous la forme d'une cavité en forme de fente, et un laser linéaire (12) étant positionnés les uns par rapport aux autres sur une surface, et le laser linéaire (12) étant orienté de telle sorte que le rayonnement (14) du laser linéaire (12) est absorbé dans le piège à rayons (10) respectif des au moins trois corps (1), la hauteur du piège à rayons (10) en référence au même point de référence étant identique pour les au moins trois corps (1).

3. Procédé selon la revendication 2, le laser linéaire (12) étant le laser linéaire (12) d'un appareil de réglage de phare et les au moins trois corps (1) étant positionnés à trois points différents de la surface de contact au sol d'un véhicule afin d'orienter l'appareil de réglage de phare parallèlement à la surface de contact au sol du véhicule.
